# FASCICULE DE BREVET EUROPEEN

(11) **EP 1 901 420 B1**
(45) Date de publication et mention de la délivrance du brevet: **14.11.2018**
(21) Numéro de dépôt: 07360041.3
(22) Date de dépôt: 18.09.2007
(51) Int. Cl.: H02P 1/26, H02P 1/42, E06B 9/68, H02P 25/04

(54) **DISPOSITIF DE COMMANDE D'UN MOTEUR ÉLECTRIQUE ET D'UNE INTERFACE HOMME-MACHINE SANS RACCORDEMENT AU NEUTRE**
VORRICHTUNG ZUR STEUERUNG EINES ELEKTROMOTORS UND EINER MENSCH-MASCHINE-SCHNITTSTELLE OHNE NULLLEITERANSCHLUSS
DEVICE FOR CONTROLLING AN ELECTRIC MOTOR AND HUMAN-MACHINE INTERFACE WITHOUT NEUTRAL CONNECTION

(30) Priorité: 18.09.2006 FR 0608146
(43) Date de publication de la demande: 19.03.2008
(73) Titulaire: Hager Controls SAS, 67700 Saverne (FR)
(72) Inventeur: Elsass, Marc, 67140 Barr (FR)
(74) Mandataire: Nuss, Laurent

(56) Documents cités:
- EP-A2- 0 562 673
- FR-A1- 2 879 047
- US-A- 5 734 248

## Description

L'invention concerne un dispositif permettant d'une part la commande d'un moteur à deux bobinages destiné à l'ouverture et à la fermeture, assistée par des fins de course électromécaniques, d'un ouvrant, et d'autre part l'alimentation d'une interface homme-machine par exemple de type télécommande dudit ouvrant, sans raccordement au neutre. L'invention concerne également un procédé d'alimentation d'un tel dispositif à la mise sous tension.

Le document FR 2 879 047 A1 divulgue un dispositif de commande d'un moteur à deux bobinages. Ce dispositif comprend un raccordement au neutre.

A titre d'exemple qui constituera le fil conducteur de la présente description, les ouvrants peuvent être des volets roulants, et l'alimentation concerne alors plus particulièrement un émetteur-récepteur échangeant des informations avec la télécommande. Alternativement, l'ouvrant peut être un portail, une banne ou encore un pare-soleil et l'interface homme-machine peut par exemple être constituée d'un écran, sans que ces exemples soient limitatifs.

L'absence du conducteur neutre induit un contexte technique particulier qui donne naissance à la problématique que se propose de résoudre la présente invention. Jusqu'ici, dans les dispositifs existants, les dispositifs de commande de volets roulants nécessitaient toujours la présence du neutre et d'une phase pour s'alimenter à partir du réseau 230/240 V.

Or, dans une hypothèse de rénovation d'un habitat avec remplacement d'un interrupteur de commande manuel par un dispositif télécommandé, et donc utilisation de l'installation existante et notamment de l'espace d'implantation du double commutateur en place jusqu'alors, seule la phase et les deux conducteurs d'alimentation du moteur sont disponibles.

Dans ces conditions, l'alimentation de l'émetteur-récepteur permettant la télécommande de la position du volet roulant, en l'absence de neutre, pose problème. La présente invention propose une solution avec un dispositif permettant la commande du moteur et l'alimentation de l'interface, dispositif qui se caractérise à titre principal en ce qu'il comporte :
- un étage interrupteur de commande du moteur par découpage de phase de la tension secteur, connecté entre la phase et les deux conducteurs reliés aux bobinages du moteur ;
- une alimentation principale à découpage de l'interface homme-machine connectée en parallèle à l'étage interrupteur de commande du moteur ;
- un étage de commutation raccordé entre l'étage interrupteur et les deux conducteurs reliés aux bobinages du moteur, pour commuter de l'un à l'autre en cas d'interruption de la liaison avec l'un des conducteurs par un fin de course ou par commande externe ;
- une alimentation auxiliaire activable à la mise sous tension ;
- une unité de contrôle réalisant la commande de l'étage interrupteur, le traitement des interruptions d'alimentation et les transferts entre alimentations principale et auxiliaire, et la commande de l'étage de commutation ; et
- un étage de détection du passage par zéro de la tension secteur envoyant un signal de synchronisation à l'adresse de l'unité de contrôle pour la commande de l'étage interrupteur.

Lorsqu'une commande de montée ou de descente par exemple d'un volet roulant est lancée, c'est le principe de l'alimentation à découpage de phase de la tension du secteur qui est en fait utilisé dans le cadre de l'invention, pour répartir l'alimentation et permettre si besoin est celle de l'interface durant une fraction de la demie période du signal pendant laquelle le moteur n'est pas commandé. Ce dernier est donc en réalité alimenté de manière discontinue, sachant que la plus grande partie de chaque demie période du secteur lui est cependant dévolue, et que cette discontinuité n'affecte pas, en pratique, son fonctionnement.

L'alimentation de l'interface homme-machine, en l'occurrence par exemple l'émetteur-récepteur de la tête de commande du volet roulant, ne concerne en effet que quelques dizaines de mA, et ne nécessite dès lors qu'une fraction très réduite de chaque demie période du secteur.

L'alimentation principale de l'émetteur-récepteur, connectée en parallèle avec ledit interrupteur, s'alimente en fait à travers le moteur. Le neutre n'est donc pas directement raccordé à cette alimentation, et n'est disponible qu'à travers le moteur.

Lorsque l'ouvrant n'est pas en mouvement, moteur arrêté, ladite alimentation principale est alimentée en permanence à travers le moteur. Le courant impliqué est cependant suffisamment faible pour être négligeable vis à vis de l'impédance du moteur, et n'a donc aucun effet sur celui-ci.

L'étage de commutation, selon une possibilité, comporte un relais commandable par l'unité de contrôle et pilotant un contact mécanique connectable alternativement aux deux conducteurs reliés via deux fins de course électromécaniques au moteur.

Ce relais à contact permet la commutation sur le circuit montée ou descente du volet roulant. Le basculement du contact s'effectue automatiquement à l'arrivée en butée sur un fin de course. Dans certaines hypothèses, ce basculement nécessite un pilotage par l'unité de contrôle. En effet, l'alimentation principale se faisant indifféremment par le circuit montée ou descente, et la position des fins de course étant inconnue lors de la mise sous tension du système, cette alimentation n'est pas forcément sous tension au démarrage : c'est la problématique à laquelle répond le procédé de l'invention, tel qu'il sera décrit plus en détail dans la suite.

Il convient par conséquent toujours de procéder, à la mise sous tension du système, à une détection de l'existence de tension aux bornes de l'alimentation principale, l'unité de contrôle se chargeant ensuite, le cas échéant, d'envoyer un signal de basculement du contact afin que l'alimentation principale soit réellement mise en fonction.

Dans l'hypothèse où l'alimentation principale n'est pas alimentée au démarrage, et pour une période temporaire débutant à la mise sous tension, l'alimentation auxiliaire est mise en service. Celle-ci comprend une capacité réservoir chargée par les deux conducteurs reliés aux bobinages du moteur et assurant l'alimentation temporaire de l'unité de contrôle. Cette capacité est en permanence sous tension secteur pendant que l'alimentation auxiliaire est activée.

Cette dernière est de type linéaire et ne dérive qu'un faible courant, de l'ordre de 20 mA au maximum sur une durée qui n'excède pas quelques millisecondes, lors de la mise sous tension. Elle est ensuite mise automatiquement en veille, dès que l'alimentation principale prend le relais, et elle n'intervient plus avant une prochaine mise sous tension.

En pratique, la capacité réservoir est raccordée à une résistance de charge connectée à un transistor de puissance relié aux conducteurs raccordés aux bobinages du moteur. Ce transistor fait office d'interrupteur d'activation / désactivation de l'alimentation auxiliaire.

Classiquement, il s'agit d'un transistor MOS dont la grille est polarisée par une diode Zener reliée auxdits conducteurs raccordés aux bobinages du moteur.

Pour que l'alimentation principale puisse ensuite prendre automatiquement le relais lorsqu'elle est sous tension, sa sortie est connectée à la base d'un transistor bipolaire raccordé en parallèle à ladite diode Zener. Lorsqu'un signal arrive de l'alimentation principale, rendant le transistor bipolaire passant et shuntant la diode Zener, le transistor MOS se bloque et l'alimentation auxiliaire n'est plus activée.

La capacité réservoir est placée en sortie d'une fonction OU dont les entrées sont respectivement raccordées à l'alimentation principale et à la résistance de charge du transistor de puissance. Elle est ainsi constamment maintenue chargée, par l'alimentation principale après l'avoir été par l'alimentation auxiliaire.

L'existence de cette alimentation auxiliaire est tout à fait indispensable, dans le cadre de l'invention, puisqu'elle permet s'il y a lieu de réaliser l'opération initiale de commutation du relais de manière à ce que l'alimentation principale puisse être elle-même mise sous tension et assurer le fonctionnement normal du système.

L'étage de détection du passage par zéro de la tension secteur est par exemple constitué d'un comparateur en boucle ouverte connecté en parallèle à l'étage interrupteur de commande du moteur, dont la sortie est reliée à l'unité de contrôle. Ce comparateur délivre un signal dont les fronts indiquent le passage par zéro de la tension secteur et permettent dès lors la synchronisation de la commande de l'étage interrupteur.

En vue notamment d'organiser s'il y a lieu le transfert entre les alimentations, l'entrée de l'alimentation principale est raccordée à un étage de détection de la présence de tension à ses bornes, dont la sortie est aussi connectée à l'unité de contrôle.

En pratique, selon une configuration possible, cet étage consiste en un comparateur dont les entrées sont connectées respectivement à l'entrée de l'alimentation principale reliée à l'étage de commutation et à une référence de tension de seuil.

Alternativement, ledit étage de détection peut comporter deux transistors NPN, la base du transistor d'entrée étant reliée via un pont de résistance à l'entrée de l'alimentation principale et le collecteur polarisé du transistor de sortie étant raccordé à l'unité de contrôle. La base du transistor de sortie est en fait connectée au collecteur du transistor d'entrée et à une résistance de polarisation qui le rend passant lorsque le transistor d'entrée est bloqué, et bloqué lorsque le transistor d'entrée est saturé.

En d'autres termes, le signal en sortie de cet étage est à l'état haut quand le niveau de tension en entrée rend le transistor d'entrée passant, et à l'état bas dans l'hypothèse inverse.

Le signal en sortie de cet étage est également utilisé pour la détection des coupures de tension, qu'elles soient temporaires (micro coupures) ou de plus ample importance.

Selon une possibilité, l'étage interrupteur est classiquement constitué de deux transistors de puissance MOS ou IGBT fonctionnant en alternance en cas de réception d'un signal de commande issu de l'unité de contrôle. La consigne de blocage / déblocage de ces transistors provient de l'unité de contrôle.

Pour s'assurer qu'après la mise sous tension, le basculement de l'alimentation principale puisse se faire, le procédé suivant est utilisé :
- désactivation de l'interface homme-machine ;
- test de l'état du signal de présence de tension aux bornes de l'alimentation principale, pendant une durée prédéterminée ;
- si ledit signal est activé, activation de l'interface homme-machine ;
- s'il n'est pas activé, commutation de l'étage de commutation ;
- test de l'état du signal de présence de tension aux bornes de l'alimentation principale, pendant une durée prédéterminée ;
- si ledit signal est activé, activation de l'interface homme-machine ;
- s'il n'est pas activé, commutation de l'étage de commutation ;
- test en boucle de l'activation du signal de présence de tension aux bornes de l'alimentation principale, jusqu'à ce que ledit signal soit activé ; et
- activation de l'interface homme-machine.

Selon une possibilité, ladite durée prédéterminée est comprise entre 700 et 900 ms. Par ailleurs, de préférence, le test en boucle est réalisé trois fois consécutivement.

En fait, au moment du démarrage, il s'agit de déconnecter tout ce qui n'est pas absolument nécessaire et qui est susceptible de consommer du courant avant commutation éventuelle de l'alimentation principale : d'où la déconnexion initiale par programme de l'interface homme-machine.

L'invention va à présent être décrite plus en détail, en référence aux figures annexées, pour lesquelles :

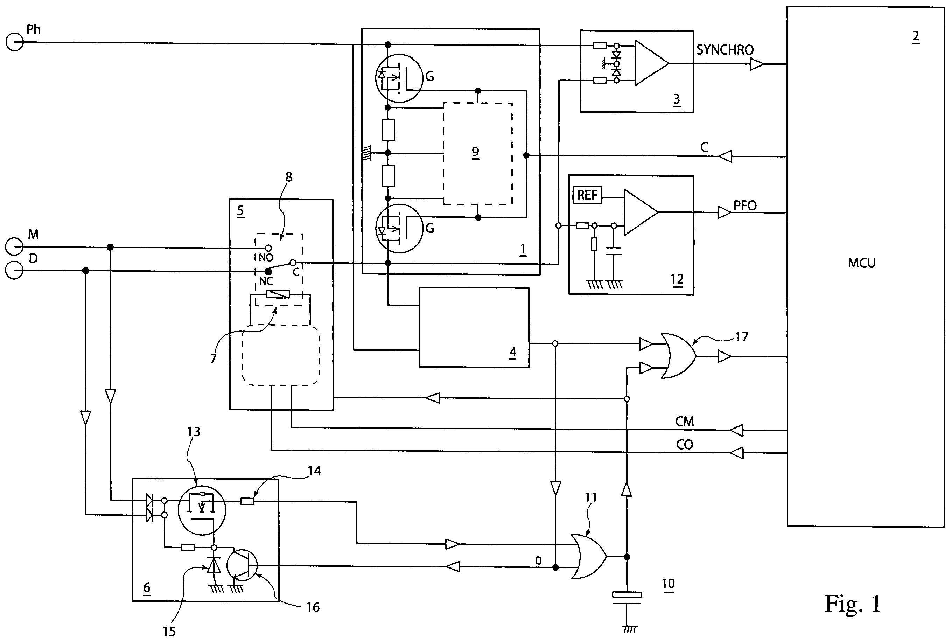

- la figure 1 représente un schéma bloc simplifié du dispositif de l'invention ; et
- la figure 2 est un organigramme du procédé de l'invention.

L'étage interrupteur (1) comporte deux transistors MOS permettant la circulation du courant alternatif du réseau à destination des conducteurs (M,D) d'alimentation des deux bobinages du moteur et permettant respectivement la commande de la montée et de la descente du volet roulant dans l'hypothèse d'une telle application de l'invention. L'étage de commutation (5) comporte un relais (7) commutant le contact mécanique (8) entre deux positions permettant respectivement la fermeture du circuit de montée (M) ou de descente (D) du volet roulant. L'étage de détection (3) du passage par zéro permet l'élaboration d'un signal de synchronisation de la commande de l'interrupteur (pour permettre, dans de bonnes conditions, la réalisation d'un découpage de phase du type conduction à l'angle durant la commande du moteur). Il se compose d'un comparateur classique dont les entrées sont connectées en parallèle à l'étage interrupteur (1).

Dans l'étage interrupteur (1), un dispositif de détection de surintensité (9), utilisant par exemple une résistance shunt dont la tension aux bornes est proportionnelle au courant qui traverse le moteur, permet d'assurer une protection dudit étage (1) contre les court-circuits.

La commande des transistors MOS de l'étage de puissance (1) est opérée par l'unité de contrôle (2), par le biais de la connexion (C).

L'alimentation principale (4), du type à découpage, est par exemple constituée d'un convertisseur DC/DC à découpage de type BUCK. Elle utilise une partie de la tension secteur (une fraction de chaque demie période) en vue d'alimenter l'unité de contrôle (2), et l'interface homme-machine que cette unité (2) gère secondairement.

Cette alimentation principale (4) est alimentée à travers le moteur (elle "voit" le neutre à travers le moteur), soit de manière continue lorsque le moteur n'est pas en fonctionnement, soit de manière discontinue, durant une fraction de chaque demie période du secteur, lorsque le moteur est commandé.

Toutefois, comme on l'a déjà indiqué ci-dessus, à la mise sous tension du système, la position du contact (8) de l'étage de commutation (5) et la position des contacts de fin de course (non représentés) ne sont pas connus avec certitude. Il est donc possible que l'alimentation principale (4) ne soit pas sous tension. Dans ce cas, une alimentation auxiliaire (6) est prévue pour assurer temporairement l'alimentation de l'unité de contrôle (2), jusqu'à ce que l'alimentation principale (4) soit sous tension. Le signal (PFO) à l'adresse de l'unité de contrôle (2) indique l'absence de tension aux bornes de l'alimentation principale (4). Dans ce cas, l'alimentation auxiliaire (6) avec sa capacité réservoir (10) assurent la mise en tension initiale du système. L'unité de contrôle envoie ensuite, par le biais des connexions C_{M} / C_{D}, une information à l'adresse de l'étage de commutation (5), forçant le contact (8) à changer de position, et permettant ainsi d'assurer l'alimentation par l'étage (4).

La capacité réservoir (10) ne se remplit via l'étage (4) que lorsque le transistor MOS (13) est passant, c'est-à-dire lorsque sa grille est polarisée par la diode Zener (15). Dans cette hypothèse, la charge de la capacité se fait à travers une résistance (14) qui évite les pics de courant, pour une durée de charge d'environ une demie seconde.

Lorsque l'alimentation principale (4) prend le relais, une dérivation (O) de sa sortie permet de rendre le transistor bipolaire (16) passant, bloquant en conséquence le transistor MOS (13) qui désactive en pratique l'alimentation auxiliaire.

L'existence d'une fonction OU (11) permet d'assurer le remplissage de la capacité réservoir (10) dans tous les cas de fonctionnement, que l'alimentation auxiliaire (6) ou l'alimentation principale (4) soient sous tension. Une autre fonction OU (17) assure en permanence l'alimentation de l'unité de contrôle (2), quel que soit l'étage d'alimentation activé.

Le microcontrôleur (2) consomme un courant faible, de l'ordre de 2 à 3 mA, alors que l'interface homme-machine (émetteur-récepteur) consomme un courant plus important de l'ordre de 20 mA. A la mise sous tension, lorsque l'alimentation auxiliaire est activée, seul le microcontrôleur (2) est par conséquent alimenté, l'interface étant maintenue en sommeil.

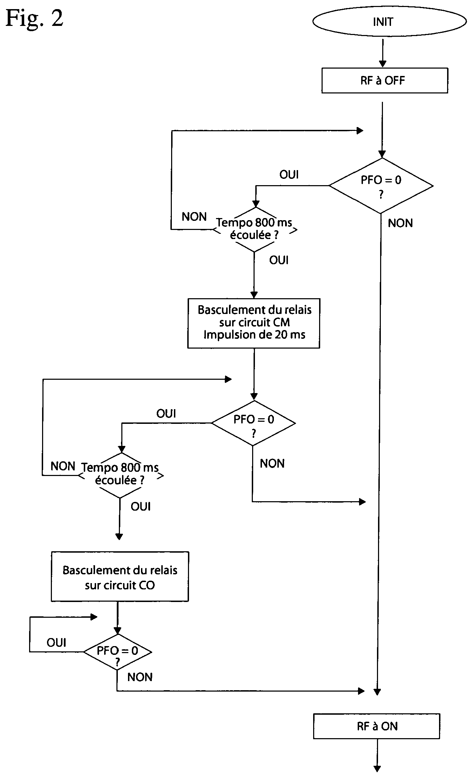

En référence à la figure 2, l'interface homme-machine RF (quelle qu'elle soit) étant désactivée, on procède en cascade à trois tests de l'état du signal (PFO) en sortie de l'étage (12) de détection de la présence de tension (par référence à une tension de seuil (REF)) aux bornes de l'alimentation principale (4), à chaque fois avec une temporisation de l'ordre de 800 ms.

A la première étape, si le microcontrôleur (2) ne détecte pas que le signal (PFO) est à l'état haut, il passe à l'étape ultérieure après avoir fait basculer le relais (7) par changement d'état d'une des lignes (C_{M}/C_{D}), par exemple dans le sens d'une montée contrôlée par la connexion (C_{M}).

Le même test de l'état du signal (PFO) est effectué avec une même temporisation. Si le résultat est toujours négatif, un nouveau basculement du relais (7) est commandé par le microcontrôleur (2), en vue de mettre en oeuvre, pour la troisième fois, le même test. Cette fois, c'est alors la connexion C_{D} qui est activée.

Dans l'hypothèse où le test est positif, c'est-à-dire si le microcontrôleur sait, car le signal (PFO) est à l'état haut, que l'alimentation principale est sous tension, l'interface homme-machine RF est activée.

## Revendications

1. Dispositif de commande d'un moteur à deux bobinages destiné à l'ouverture et à la fermeture, assistés par des fins de course électromécaniques, d'un ouvrant de type volet roulant, et d'alimentation d'une interface homme-machine de type d'un émetteur-récepteur d'une télécommande dudit ouvrant comportant :
- un étage interrupteur (1) de commande du moteur par découpage de phase de la tension secteur;
- une alimentation principale (4) à découpage de l'interface homme-machine connectée en parallèle à l'étage interrupteur (1) de commande du moteur ;
- un étage de commutation (5);
- une alimentation auxiliaire (6) activable à la mise sous tension;
- une unité de contrôle (2) réalisant la commande de l'étage interrupteur (1) et la commande de l'étage de commutation (5) ; et
- un étage de détection (3) du passage par zéro de la tension secteur envoyant un signal de synchronisation à l'adresse de l'unité de contrôle (2) pour la commande de l'étage interrupteur (1), **caractérisé en ce que** :
- le dispositif est un dispositif sans raccordement au neutre ;
- l'étage interrupteur (1) est connecté entre la phase et les deux conducteurs reliés aux bobinages du moteur ;
- l'étage de commutation (5) est raccordé entre l'étage interrupteur (1) et les deux conducteurs (M, D) reliés aux bobinages du moteur, pour commuter de l'un à l'autre en cas d'interruption de la liaison avec l'un des conducteurs (M, D) par un fin de course ou par commande externe ; et **en ce que**
- l'unité de contrôle (2) réalisant en outre le traitement des interruptions d'alimentation et les transferts entre alimentations principale (4) et auxiliaire (6).

2. Dispositif selon la revendication 1, **caractérisé en ce que** l'étage de commutation (5) comporte un relais (7) commandé par l'unité de contrôle (2) et pilotant un contact mécanique (8) connectable alternativement aux deux conducteurs (M, D) reliés via deux fins de course électromécaniques aux bobinages.

3. Dispositif selon l'une quelconque des revendications précédentes, **caractérisé en ce que** l'alimentation auxiliaire (6) comprend une capacité réservoir (10) chargée par les deux conducteurs (M, D) reliés aux bobinages du moteur et assurant l'alimentation temporaire de l'unité de contrôle (2).

4. Dispositif selon la revendication précédente, **caractérisé en ce que** la capacité réservoir (10) est raccordée à une résistance de charge (14) connectée à un transistor de puissance (13) relié aux conducteurs (M, D) raccordés aux bobinages du moteur.

5. Dispositif selon la revendication précédente, **caractérisé en ce que** le transistor de puissance est un transistor MOS (13) dont la grille est polarisée par une diode Zener (15) reliée aux conducteurs (M, D) raccordés aux bobinages du moteur.

6. Dispositif selon la revendication précédente, **caractérisé en ce que** la sortie de l'alimentation principale (4) est connectée à la base d'un transistor bipolaire (16) raccordé en parallèle à la diode Zener (15).

7. Dispositif selon l'une quelconque des revendications 4 à 6, **caractérisé en ce que** la capacité réservoir (10) est placée en sortie d'une fonction OU (11) dont les entrées sont respectivement raccordées à l'alimentation principale (4) et à la résistance de charge (14) du transistor de puissance (13).

8. Dispositif selon l'une quelconque des revendications précédentes, **caractérisé en ce que** l'entrée de l'alimentation principale (4) est raccordée à un étage (12) de détection de la présence de tension à ses bornes, dont la sortie (PFO) est connectée à l'unité de contrôle (2).

9. Dispositif selon la revendication précédente, **caractérisé en ce que** l'étage (12) de détection de présence de tension aux bornes de l'alimentation principale (4) est un comparateur dont les entrées sont connectées respectivement à l'entrée de l'alimentation principale (4) reliée à l'étage de commutation (5) et à une référence de tension de seuil (REF).

10. Dispositif selon la revendication 8, **caractérisé en ce que** ledit étage (12) de détection comporte deux transistors NPN, la base du transistor d'entrée étant reliée via un pont de résistance à l'entrée de l'alimentation principale (4) et le collecteur polarisé du transistor de sortie étant raccordé à l'unité de contrôle (2), la base du transistor de sortie étant connectée au collecteur du transistor d'entrée et à une résistance de polarisation qui le rend passant lorsque le transistor d'entrée est bloqué, et bloqué lorsque le transistor d'entrée est saturé.

11. Dispositif selon l'une quelconque des revendications précédentes, **caractérisé en ce que** l'étage de détection (3) du passage par zéro de la tension secteur est constitué d'un comparateur en boucle ouverte connecté en parallèle à l'étage interrupteur (1) de commande du moteur, dont la sortie est reliée à l'unité de contrôle (2).

12. Dispositif selon l'une quelconque des revendications précédentes, **caractérisé en ce que** l'étage interrupteur (1) est constitué de deux transistors de puissance MOS ou IGBT fonctionnant en alternance en cas de réception d'un signal de commande (C) issu de l'unité de contrôle (2).

13. Procédé d'alimentation, à la mise sous tension, d'un dispositif selon les revendications précédentes à étage (12) de détection de la présence de tension aux bornes de l'alimentation principale, comprenant
- envoi d'un signal de synchronisation depuis l'étage de détection (3) du passage par zéro de la tension secteur à l'adresse de l'unité de contrôle (2) pour la commande de l'étage interrupteur (1) **caractérisé par**:
- absence de raccordement au neutre;
- désactivation de l'interface homme-machine ;
- test de l'état du signal (PFO) de présence de tension aux bornes de l'alimentation principale (4), pendant une durée prédéterminée ;
- si ledit signal est activé, activation de l'interface homme-machine ;
- s'il n'est pas activé, commutation de l'étage de commutation (5) ;
- test en boucle de l'activation du signal (PFO) de présence de tension aux bornes de l'alimentation principale (4), jusqu'à ce que ledit signal soit activé ;
- activation de l'interface homme-machine ; et
- commutation de l'un des deux conducteurs (M, D) reliés aux bobinages du moteur à l'autre des deux conducteurs (M, D) reliés aux bobinages du moteur en cas d'interruption de la liaison avec l'un des conducteurs (M, D) par un fin de course ou par commande externe.

14. Procédé d'alimentation selon la revendication précédente, **caractérisé en ce que** la durée prédéterminée est comprise entre 700 et 900 ms.

15. Procédé d'alimentation selon l'une des revendications 13 et 14, **caractérisé en ce que** le test en boucle est réalisé trois fois consécutivement.

## Patentansprüche

1. Vorrichtung zum Steuern eines Motors mit zwei zum Öffnen und Schließen bestimmten Spulen, unterstützt von elektromechanischen Endschaltern, eines als Rollo-Öffner ausgeprägten Öffners und zur Versorgung einer Mensch-Maschine-Schnittstelle des Typs "Sender-Empfänger" einer Fernsteuerung des Öffners, die folgendes umfasst:
- eine Motorsteuerschaltstufe (1) durch Phasenabschneiden der Netzspannung;
- ein Hauptschaltnetzteil (4) der Mensch-Maschine-Schnittstelle, das parallel zur Motorsteuerschaltstufe (1) geschaltet ist;
- eine Kommutierungsstufe (5);
- ein Hilfsnetzteil (6), das beim Einschalten aktivierbar ist;
- eine Steuereinheit (2), die die Steuerung der Schaltstufe (1) und die Steuerung der Kommutierungsstufe (5) vornimmt; und
- eine Detektionsstufe (3) des Nulldurchgangs der Netzspannung, die ein Synchronisationssignal an die Steuereinheit (2) zur Steuerung der Schaltstufe (1) sendet, **dadurch gekennzeichnet, dass**:
- die Vorrichtung eine Vorrichtung ohne Verbindung zum Neutralleiter ist;
- die Schaltstufe (1) zwischen der Phase und den zwei Leitern, die mit den Motorspulen verbunden sind, angeschlossen ist;
- die Kommutierungsstufe (5) zwischen der Schaltstufe (1) und den beiden an die Motorspulen angeschlossenen Leitern (M, D) geschaltet ist, um zwischen ihnen bei einer Unterbrechung der Verbindung mit einem der Leiter (M, D) durch einen Endschalter oder durch externe Steuerung zu schalten; und dass
- die Steuereinheit (2) des Weiteren die Verarbeitung von Stromunterbrechungen und die Übertragungen zwischen Haupt- (4) und Hilfsnetzteil (6) durchführt.

2. Vorrichtung nach Anspruch 1, **dadurch gekennzeichnet, dass** die Kommutierungsstufe (5) ein Relais (7) umfasst, das von der Steuereinheit (2) gesteuert wird und einen mechanischen Kontakt (8) antreibt, der abwechselnd mit den zwei Leitern (M, D) über zwei elektromechanische Endschalter mit den Spulen verbindbar ist.

3. Vorrichtung nach einem der vorhergehenden Ansprüche, **dadurch gekennzeichnet, dass** das Hilfsnetzteil (6) eine Reservekapazität (10) umfasst, die von den zwei Leitern (M, D) geladen wird, die mit den Motorspulen verbunden sind und die die zeitweilige Versorgung der Steuereinheit (2) gewährleistet.

4. Vorrichtung nach dem vorhergehenden Anspruch, **dadurch gekennzeichnet, dass** die Reservekapazität (10) mit einem Lastwiderstand (14) verbunden ist, der mit einem Leistungstransistor (13) verbunden ist, der mit den Leitern (M, D) der Motorspulen verbunden ist.

5. Vorrichtung nach dem vorhergehenden Anspruch, **dadurch gekennzeichnet, dass** der Leistungstransistor ein MOS-Transistor (13) ist, dessen Gate durch eine Zenerdiode (15) vorgespannt ist, die an die Leiter (M, D) der Motorspulen angeschlossen ist.

6. Vorrichtung nach dem vorhergehenden Anspruch, **dadurch gekennzeichnet, dass** der Ausgang des Hauptnetzteils (4) mit der Basis eines Bipolartransistors (16) verbunden ist, der parallel zur Zenerdiode (15) geschaltet wird.

7. Vorrichtung nach einem der Ansprüche 4 bis 6, **dadurch gekennzeichnet, dass** die Reservekapazität (10) am Ausgang einer ODER-Funktion (11) liegt, deren Eingänge jeweils mit dem Hauptnetzteil (4) und mit dem Lastwiderstand (14) des Leistungstransistors (13) verbunden sind.

8. Vorrichtung nach einem der vorhergehenden Ansprüche, **dadurch gekennzeichnet, dass** der Eingang des Hauptnetzteils (4) mit einer Stufe (12) zur Detektion des Vorhandenseins von Spannung an seinen Anschlüssen verbunden ist, deren Ausgang (PFO) mit der Steuereinheit (2) verbunden ist.

9. Vorrichtung nach dem vorhergehenden Anspruch, **dadurch gekennzeichnet, dass** die Stufe (12) zur Detektion des Vorhandenseins von Spannung an den Anschlüssen des Hauptnetzteils (4) ein Komparator ist, dessen Eingänge jeweils mit dem Eingang des Hauptnetzteils (4), das an die Kommutierungsstufe (5) angeschlossen ist, und mit einer Schwellenspannungsreferenz (REF) verbunden sind.

10. Vorrichtung nach Anspruch 8, **dadurch gekennzeichnet, dass** die Detektionsstufe (12) zwei NPN-Transistoren umfasst, wobei die Basis des Eingangstransistors über eine Widerstandsbrücke mit dem Eingang des Hauptnetzteils (4) verbunden ist und der vorgespannte Kollektor des Ausgangstransistors mit der Steuereinheit (2) verbunden ist, wobei die Basis des Ausgangstransistors mit dem Kollektor des Eingangstransistors und mit einem Vorspannungswiderstand verbunden ist, der ihn einschaltet, wenn der Eingangstransistor blockiert ist und blockiert, wenn der Eingangstransistor gesättigt ist.

11. Vorrichtung nach einem der vorhergehenden Ansprüche, **dadurch gekennzeichnet, dass** die Detektionsstufe (3) des Nulldurchgangs der Netzspannung aus einem Komparator mit offener Schleife besteht, der parallel zur Schaltstufe (1) des Motors geschaltet ist, deren Ausgang mit der Steuereinheit (2) verbunden ist.

12. Vorrichtung nach einem der vorhergehenden Ansprüche, **dadurch gekennzeichnet, dass** die Schalterstufe (1) aus zwei MOS- oder IGBT-Leistungstransistoren besteht, die bei Empfang eines Steuersignals (C) von der Steuereinheit (2) abwechselnd arbeiten.

13. Verfahren für die Versorgung in Folge eines Einschaltens einer Vorrichtung gemäß den vorhergehenden Ansprüchen mit einer Stufe (12) zur Detektion des Vorhandenseins von Spannung an den Anschlüssen des Hauptnetzteils, umfassend:
- Senden eines Synchronisationssignals von der Detektionsstufe (3) des Nulldurchgangs der Netzspannung an die Steuereinheit (2) zur Steuerung der Schaltstufe (1), gekennzeichnet von:
- Abwesenheit der Verbindung zum Neutralleiter;
- Deaktivierung der Mensch-Maschine-Schnittstelle;
- Prüfen des Signalzustands (PFO) des Vorhandenseins von Spannung an den Anschlüssen des Hauptnetzteils (4) für eine vorbestimmte Zeitdauer;
- wenn das Signal aktiviert ist, Aktivierung der Mensch-Maschine-Schnittstelle;
- wenn es nicht aktiviert ist, Umschalten der Kommutierungsstufe (5);
- Prüfung der Aktivierung der Signalspannung (PFO) an den Anschlüssen des Hauptnetzteils (4) in einer Schleife, bis das Signal aktiviert wird;
- Aktivierung der Mensch-Maschine-Schnittstelle; und
- Umschalten eines der zwei Leiter (M, D), die mit den Motorspulen verbunden sind, auf den anderen der zwei Leiter (M, D), die mit den Motorspulen verbunden sind, im Falle einer Unterbrechung der Verbindung mit einem der Leiter (M, D) durch einen Endschalter oder durch externen Befehl.

14. Verfahren nach dem vorhergehenden Anspruch, **dadurch gekennzeichnet, dass** die vorbestimmte Zeit zwischen 700 und 900 ms liegt.

15. Verfahren nach einem der Ansprüche 13 und 14, **dadurch gekennzeichnet, dass** die Prüfung in einer Schleife dreimal hintereinander durchgeführt wird.

## Claims

1. Device for controlling a dual-winding motor intended for the opening and the closure, with assistance from electromechanical limits, of a closure system of roller shutter type, and for supplying power to a human-machine interface of the type for transmitting and receiving a remote command for said closure system, including:
- a switch stage (1) for controlling the motor by phase switching of the mains voltage;
- a main power supply (4) with switching of the human-machine interface, connected in parallel with the switch stage (1) for controlling the motor;
- a switching stage (5);
- an auxiliary power supply (6) able to be activated upon powering up;
- a control unit (2) controlling the switch stage (1) and controlling the switching stage (5); and
- a stage (3) for detecting the zero crossing of the mains voltage, sending a synchronization signal to the address of the control unit (2) so as to control the switch stage (1), **characterized in that**:
- the device is a device without connection to the neutral;
- the switch stage (1) is connected between the phase and the two conductors that are linked to the windings of the motor;
- the switching stage (5) is connected between the switch stage (1) and the two conductors (M, D) that are linked to the windings of the motor, so as to switch from one to the other if the link with one of the conductors (M, D) is interrupted by a limit or by an external command; and **in that**
- the control unit (2) furthermore processes the power supply interruptions and the transfers between main power supply (4) and auxiliary power supply (6).

2. Device according to Claim 1, **characterized in that** the switching stage (5) includes a relay (7) controlled by the control unit (2) and driving a mechanical contact (8) that is able to be connected alternately to the two conductors (M, D) that are linked to the windings via two electromechanical limits.

3. Device according to either one of the preceding claims, **characterized in that** the auxiliary power supply (6) comprises a storage capacitor (10) charged by the two conductors (M, D) that are linked to the windings of the motor and ensuring the temporary supply of power to the control unit (2).

4. Device according to the preceding claim, **characterized in that** the storage capacitor (10) is connected to a load resistor (14) that is connected to a power transistor (13) that is linked to the conductors (M, D) that are connected to the windings of the motor.

5. Device according to the preceding claim, **characterized in that** the power transistor is a MOS transistor (13) whose gate is biased by a Zener diode (15) that is linked to the conductors (M, D) that are connected to the windings of the motor.

6. Device according to the preceding claim, **characterized in that** the output of the main power supply (4) is connected to the base of a bipolar transistor (16) that is connected in parallel with the Zener diode (15).

7. Device according to any one of Claims 4 to 6, **characterized in that** the storage capacitor (10) is situated at the output of an OR function (11) whose inputs are connected to the main power supply (4) and to the load resistor (14) of the power transistor (13), respectively.

8. Device according to any one of the preceding claims, **characterized in that** the input of the main power supply (4) is connected to a stage (12) for detecting the presence of a voltage across its terminals, whose output (PFO) is connected to the control unit (2).

9. Device according to the preceding claim, **characterized in that** the stage (12) for detecting the presence of a voltage across the terminals of the main power supply (4) is a comparator whose inputs are connected to the input of the main power supply (4) that is linked to the switching stage (5) and to a threshold voltage reference (REF), respectively.

10. Device according to Claim 8, **characterized in that** said detection stage (12) includes two NPN transistors, the base of the input transistor being linked via a resistor bridge to the input of the main power supply (4) and the biased collector of the output transistor being connected to the control unit (2), the base of the output transistor being connected to the collector of the input transistor and to a biasing resistor that puts it into the on state when the input transistor is in the off state, and into the off state when the input transistor is saturated.

11. Device according to any one of the preceding claims, **characterized in that** the stage (3) for detecting the zero crossing of the mains voltage is formed of an open-loop comparator connected in parallel with the switch stage (1) for controlling the motor, whose output is linked to the control unit (2).

12. Device according to any one of the preceding claims, **characterized in that** the switch stage (1) is formed of two MOS or IGBT power transistors operating alternately in the event of reception of a control signal (C) coming from the control unit (2).

13. Method for supplying power, upon powering up, to a device according to one of the preceding claims with a stage (12) for detecting the presence of a voltage across the terminals of the main power supply, comprising
- sending a synchronization signal from the stage (3) for detecting the zero crossing of the mains voltage to the address of the control unit (2) so as to control the switch stage (1), **characterized by**:
- the absence of a connection to the neutral;
- deactivation of the human-machine interface;
- testing of the state of the signal (PFO) signalling the presence of a voltage across the terminals of the main power supply (4) for a predetermined duration;
- if said signal is activated, activation of the human-machine interface;
- if it is not activated, switching of the switching stage (5);
- looped testing of the activation of the signal (PFO) signalling the presence of a voltage across the terminals of the main power supply (4), until said signal is activated;
- activation of the human-machine interface; and
- switching from one of the two conductors (M, D) that are linked to the windings of the motor to the other of the two conductors (M, D) that are linked to the windings of the motor if the link with one of the conductors (M, D) is interrupted by a limit or by an external command.

14. Power supply method according to the preceding claim, **characterized in that** the predetermined duration is between 700 and 900 ms.

15. Power supply method according to either of Claims 13 and 14, **characterized in that** the looped testing is performed three times in a row.
